(19) Europäisches Patentamt
European Patent Office
Office européen des brevets

(11) **EP 4 693 562 A1**

(12) **EUROPEAN PATENT APPLICATION**
published in accordance with Art. 153(4) EPC


(43) Date of publication:
**11.02.2026 Bulletin 2026/07**

(21) Application number: **24781188.8**

(22) Date of filing: **26.03.2024**

(51) International Patent Classification (IPC):
***H01M 10/0565*** *(2010.01)* ***H01M 10/0569*** *(2010.01)*
***H01M 4/134*** *(2010.01)* ***H01M 10/052*** *(2010.01)*
***H01M 4/02*** *(2006.01)*

(52) Cooperative Patent Classification (CPC):
**H01M 4/02; H01M 4/134; H01M 10/052;**
**H01M 10/0565; H01M 10/0569;** Y02E 60/10

(86) International application number:
**PCT/KR2024/003783**

(87) International publication number:
**WO 2024/205197 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2023 KR 20230039413**
**03.07.2023 KR 20230085975**



(71) Applicant: **SAMSUNG SDI CO., LTD.**
**Yongin-si, Gyeonggi-do 17084 (KR)**

(72) Inventors:
- **WOO, Hyun Sik**
**Yongin-Si Gyeonggi-do 17084 (KR)**
- **MOON, Jong Seok**
**Yongin-Si Gyeonggi-do 17084 (KR)**
- **BAE, Woo Jin**
**Yongin-Si Gyeonggi-do 17084 (KR)**
- **LEE, Kang Hee**
**Yongin-Si Gyeonggi-do 17084 (KR)**
- **KIM, Hee Min**
**Yongin-Si Gyeonggi-do 17084 (KR)**
- **PARK, Jong Seok**
**Yongin-Si Gyeonggi-do 17084 (KR)**
- **PARK, Jin Hwan**
**Yongin-Si Gyeonggi-do 17084 (KR)**

(74) Representative: **Michalski Hüttermann & Partner Patentanwälte mbB**
**Kaistraße 16A**
**40221 Düsseldorf (DE)**


(54) **POLYMER ELECTROLYTE AND LITHIUM BATTERY COMPRISING SAME**


(57) A polymer electrolyte including a cross-linked polymer including: a repeating unit (A) derived from a cross-linkable monomer including two or more double bond functional groups including an ester bond; and a repeating unit (B) derived from an ionic monomer including one double bond functional group and an ionic functional group.


FIG. 1

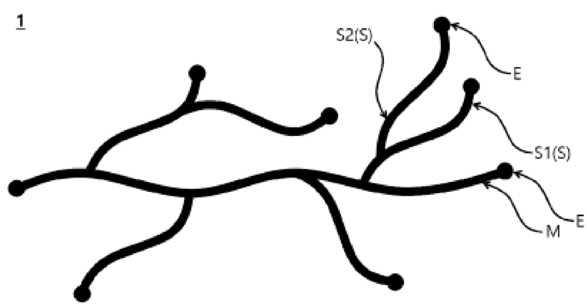


EP 4 693 562 A1

## Description

### Technical Field

A polymer electrolyte, a method of manufacturing the same, and a lithium metal battery including the polymer electrolyte are presented.

### Background Art

Lithium secondary batteries are high-performance secondary batteries with the highest energy density among the currently commercialized secondary batteries and may be used in various fields such as electric vehicles.

A lithium metal thin film is used as a negative electrode of a lithium metal battery. When such a lithium metal thin film is used as a negative electrode, the reactivity with a liquid electrolyte is high during charge and discharge due to high reactivity of lithium. Alternatively, dendrites may form on the lithium negative electrode thin film, which may reduce the lifespan and stability of the lithium metal battery using the lithium metal thin film, and thus improvement thereon is required.

### Disclosure of Invention

### Technical Problem

One aspect is to provide an ion conductive polymer electrolyte with improved high-temperature stability.

Another aspect is to provide a lithium battery including the polymer electrolyte described above.

### Solution to Problem

According to an aspect, provided is a polymer electrolyte including a cross-linked structure including a cross-linked polymer including:

a repeating unit (A) derived from a cross-linkable monomer including two or more double bond functional groups including an ester bond; and
a repeating unit (B) derived from an ionic monomer including an ionic functional group and one double bond functional group.

According to another aspect, provided is a lithium battery including: a positive electrode; a negative electrode; and the above-described polymer electrolyte arranged between the positive electrode and the negative electrode.

### Advantageous Effects of Invention

A polymer electrolyte according to one embodiment has a low content of unreacted monomers, and thus has excellent ionic conductivity and high-temperature stability. By using such a polymer electrolyte, a lithium battery with improved capacity retention rate and capacity characteristics may be manufactured.

### Brief Description of Drawings

FIG. 1 schematically illustrates the structure of a cross-linked polymer constituting a polymer electrolyte according to one embodiment.
FIG. 2 shows a cross-sectional view of a lithium battery according to one embodiment.
FIG. 3 shows a cross-sectional view of a lithium battery according to one embodiment.
FIG. 4 is a schematic view of a lithium battery according to one exemplary embodiment.
FIG. 5 is a schematic view of a lithium battery according to one exemplary embodiment.
FIG. 6 is a schematic view of a lithium battery according to one exemplary embodiment.

### Mode for the Invention

Hereinafter, a polymer electrolyte according to one embodiment and a lithium battery including the same will be described in more detail. These examples are provided merely as examples to more specifically explain the present

disclosure, and it will be apparent to those skilled in the art that the scope of the present disclosure is not limited by these examples.

Unless defined otherwise, all technical and scientific terms used herein have the same meaning as commonly understood by one of ordinary skill in the art to which the present disclosure belongs. In case of conflict, this specification, including definitions, will prevail.

Although methods and materials similar or equivalent to those described herein can be used in the practice or test of the present disclosure, suitable methods and materials are described herein. Singular expressions include plural expressions unless the context clearly indicates otherwise.

It should be understood that the terms "include" or "have" as used herein are intended to indicate the presence of a feature, number, step, operation, component, part, ingredient, material, or a combination thereof described herein, but do not exclude in advance the possibility of the presence or addition of one or more other features, numbers, steps, operations, components, parts, ingredients, materials, or combinations thereof.

The term "combination thereof" as used herein means a mixture or combination of one or more of the described components.

As used herein, the term "and/or" is meant to include any and all combinations of one or more of the related listed items. As used herein, the term "or" means "and/or." The expressions "at least one," "one or more types," or "one or more" preceding components herein are intended to supplement the entire list of components and not to supplement individual components described above.

To clearly express the various layers and areas in the drawing, the thickness is enlarged or reduced. Similar parts are designated by the same drawing reference numerals throughout the specification. When a part, such as a layer, film, region, or plate, is said to be "on" or "over" another part throughout the specification, this includes not only cases where it is directly over the other part, but also cases where there are other parts in between. Throughout the specification, the terms first, second, or the like may be used to describe various components, but the components should not be limited by the terms. The terms are used solely to distinguish one component from another component.

As used herein, the term "metal" includes both metals and metalloids such as silicon and germanium, in either an elemental or ionic state.

As used herein, the term "alloy" means a mixture of two or more metals.

As used herein, the term "positive electrode active material" means a positive electrode material capable of undergoing lithiation and delithiation.

As used herein, the term "negative electrode active material" means a negative electrode material capable of undergoing lithiation and delithiation.

As used herein, the terms "lithiation" and "lithiating" mean a process of adding lithium to a positive electrode active material or a negative electrode active material.

As used herein, the terms "delithiation" and "delithiating" mean a process of removing lithium from a positive electrode active material or a negative electrode active material.

As used herein, the terms "charging" and "charge" mean a process of providing electrochemical energy to a battery.

As used herein, the terms "discharging" and "discharge" mean a process of removing electrochemical energy from a battery.

As used herein, the terms "positive electrode" and "cathode" mean an electrode at which electrochemical reduction and lithiation occur during a discharging process.

As used herein, the terms "negative electrode" and "anode" mean an electrode at which electrochemical oxidation and delithiation occur during a discharging process.

Hereinafter, exemplary polymer electrolytes and lithium batteries including the same will be described in more detail with reference to the attached drawings.

[Polymer electrolyte]

The polymer electrolyte includes a cross-linked polymer including: a repeating unit (A) derived from a cross-linkable monomer including two or more double bond functional groups including an ester bond; and a repeating unit (B) derived from an ionic monomer including an ionic functional group and one double bond functional group.

For example, when the cross-linked polymer includes: a repeating unit (A) derived from a cross-linkable monomer including two or more double bond functional groups including an ester bond; and a repeating unit (B) derived from an ionic monomer including an ionic functional group and one double bond functional group, the ionic conductivity as well as the stability at room temperature and high temperature may be improved by including the ionic monomer. Accordingly, a lithium battery including the polymer electrolyte may have improved capacity characteristics and capacity retention rate characteristics.

For example, when the cross-linked polymer includes a repeating unit (A) derived from a cross-linkable monomer

including two or more double bond functional groups including an ester bond, high-temperature stability may be improved. For example, since the cross-linked polymer includes double bond functional groups including an ester bond rather than an ether bond, the reactivity of the cross-linkable monomers increases, and thus, the content of unreacted monomers remaining after the crosslinking reaction during the manufacturing process of the cross-linked polymer may be reduced. Accordingly, side reactions due to unreacted monomers are prevented, thereby further improving the high-temperature stability of the cross-linked polymer, and a lithium battery including the polymer electrolyte may have further improved high temperature capacity characteristics and high temperature lifespan characteristics.

For example, when the cross-linked polymer includes a repeating unit (B) derived from an ionic monomer including an ionic functional group and one double bond functional group, the ionic conductivity of the polymer electrolyte is improved, and lithium ions may be uniformly plated on the negative electrode described below, thereby effectively preventing the formation of lithium dendrites. For example, since the ionic monomer includes one double bond functional group, crosslinking reaction between the ionic monomers is prevented, and the ionic monomers may be dispersed and arranged at the ends of the main chain and side chains of the cross-linked polymer in the form of endcapping during the crosslinking reaction. Accordingly, charge unevenness due to aggregation of ionic monomers is prevented, and repeating units (B) derived from the uniformly arranged ionic monomers improve the ionic conductivity of the polymer electrolyte, so that lithium ions may be uniformly plated on the negative electrode described below. Accordingly, the capacity characteristics and lifespan characteristics of a lithium battery including the polymer electrolyte may be further improved.

FIG. 1 schematically illustrates the structure of a cross-linked polymer constituting a polymer electrolyte according to one embodiment.

Referring to FIG. 1, the cross-linked polymer 1 may include a main chain M and a plurality of side chains S extending from the main chain M. For example, the plurality of side chains S may include a side chain S1 extending from the main chain M and a side chain S2 extending from the side chain S1 extending from the main chain M.

Referring to FIG. 1, the main chain M and the plurality of side chains S may each include ends (E) at which a crosslinking reaction or polymerization reaction is terminated. For example, a repeating unit (B) derived from an ionic monomer may be arranged at one or more of the ends E included in the main chain M and the plurality of side chains S. For example, a crosslinking reaction or polymerization reaction is performed at a double bond functional group, and since the ionic monomer includes one double bond functional group, when the ionic monomer is crosslinked or polymerized in the cross-linked polymer, there is no longer a site at which a crosslinking reaction or polymerization reaction is performed, so that repeating units (B) derived from the ionic monomer may be arranged at one or more of the ends E included in the main chain S and the plurality of side chains M. For example, when repeating units (B) derived from the ionic monomer are arranged at one or more of the ends E included in the main chain S and the plurality of side chains M, the ionic monomers are uniformly distributed throughout the cross-linked polymer 1 rather than being aggregated, thereby uniformly improving the ionic conductivity of the polymer electrolyte including the cross-linked polymer 1. Accordingly, the lifespan characteristics and capacity characteristics of a lithium battery including the polymer electrolyte may be improved.

According to one embodiment, the double bond functional group in the cross-linkable monomer may include an acrylate group.

According to one embodiment, the double bond functional group in the cross-linkable monomer may be represented by Formula 1:

Formula 1

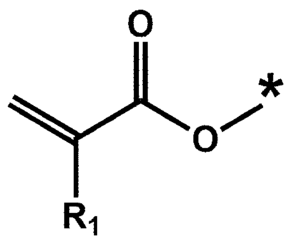

wherein, in Formula 1,

$R_1$ is any one selected from the group consisting of hydrogen, a substituted or unsubstituted alkyl group having 1 to 20 carbon atoms, and a substituted or unsubstituted aryl group having 6 to 20 carbon atoms, and * is a binding site to a neighboring atom.

According to one embodiment, $R_1$ in Formula 1 may be hydrogen or an alkyl group having 1 to 20 carbon atoms.

According to one embodiment, $R_1$ in Formula 1 may be hydrogen, a methyl group, an ethyl group, a propyl group, or a butyl group.

According to one embodiment, the cross-linkable monomer may include three or more double bond functional groups including an ester bond. For example, when the cross-linkable monomer includes three or more double bond

functional groups including an ester bond, the reactivity of the cross-linkable monomers is further improved, so that the content of unreacted monomers may be reduced more easily. Accordingly, when the cross-linkable monomer includes three or more double bond functional groups including an ester bond, the high-temperature stability of a polymer electrolyte including a crosslinked polymer including repeating units derived from the cross-linkable monomer may be further improved. In addition, when the cross-linkable monomer includes three or more double bond functional groups including an ester bond, as the number of double bond functional groups including an ester bond increases, the content of unreacted monomers may be reduced more easily even when the proportion of repeating units (A) derived from the cross-linkable monomer in the cross-linked polymer decreases, and as the proportion of repeating units (A) derived from the cross-linkable monomer decreases, the proportion of repeating units (B) derived from the ionic monomer may relatively increase. Accordingly, the ionic conductivity of the cross-linked polymer is further improved, and a lithium battery including a polymer electrolyte including the cross-linked polymer with improved ionic conductivity may have further improved capacity characteristics.

According to one embodiment, the double bond functional group in the cross-linkable monomer may not include an ether group (-O-). For example, the double bond functional group in the cross-linkable monomer may include an ester group (-C(=O)-O-) and may not include an ether group (-O-). For example, when the double bond functional group in the cross-linkable monomer includes an ether group (-O-) instead of an ester group (-C(=O)-O-), the content of unreacted monomers in the cross-linked polymer may increase, resulting in a decrease in high-temperature stability.

According to one embodiment, the cross-linkable monomer may include trimethylolpropane dimethacrylate, trimethylolpropane trimethacrylate, pentaerythritol tetraacrylate, pentaerythritol triacrylate, tris(2-hydroxyethyl) isocyanurate triacrylate, ethoxylated glycerin triacrylate, glycerol propoxylate triacrylate, ethoxylated dipentaerythritol hexaacrylate, or dipentaerythritol hexaacrylate.

According to one embodiment, the double bond functional group in the ionic monomer may include an allyl group, an acrylic group, a vinyl group, or a combination thereof. For example, the ionic monomer may include an acrylic group, a vinyl group, or a combination thereof.

According to one embodiment, the ionic functional group included in the ionic monomer may include a cationic functional group, an anionic functional group, or a combination thereof. For example, when the ionic monomer includes a cationic functional group, the ionic monomer may be a cationic monomer. For example, when the ionic monomer includes an anionic functional group, the ionic monomer may be an anionic monomer. For example, when the ionic monomer includes both a cationic functional group and an anionic functional group, the ionic monomer may be a zwitterionic monomer.

According to one embodiment, the cationic functional group may include pyrrolidium, piperidinium, ammonium, imidazolium, phosphonium, or a combination thereof. For example, the cationic functional group may include pyrrolidium, piperidinium, ammonium, imidazolium, or a combination thereof.

According to one embodiment, the anionic functional group may include trifluoromethanesulfonyl imide (TFSI), bis(fluorosulfonyl) imide (FSI), acetate, bromide (Br), chloride ($Cl^-$), iodide ($I^-$), dicyanamide, hexafluorophosphate, tetrafluoroborate, hydrogen sulfate, or a combination thereof. For example, the anionic functional group may include trifluoromethanesulfonyl imide (TFSI), bis(fluorosulfonyl) imide (FSI), or a combination thereof.

According to one embodiment, the ionic monomer may include a cationic monomer or a zwitterionic monomer. For example, when the ionic monomer includes a cationic monomer, the cationic monomer may include a cationic functional group and one double bond functional group. For example, when the ionic monomer includes a zwitterionic monomer, the zwitterionic monomer may include an anionic functional group, a cationic functional group, and one double bond functional group.

According to one embodiment, the ionic monomer may include a cationic monomer and an anion. In this case, the cationic monomer may include a cationic functional group and one double bond functional group. The anion may include the anionic functional group. For example, the anion may be the anionic functional group.

According to one embodiment, the ionic monomer may include, as a cationic monomer, a pyrrolidium-allyl monomer, a pyrrolidium-acrylate monomer, an ammoniumaryl monomer, an ammonium-acrylate monomer, or a combination thereof. In this case, the ionic monomer may include, as an anion, trifluoromethanesulfonyl imide (TFSI), bis(fluorosulfonyl) imide (FSI), acetate, bromide (Br), chloride ($Cl^-$), iodide ($I^-$), dicyanamide, hexafluorophosphate, tetrafluoroborate, hydrogen sulfate, or a combination thereof.

For example, a pyrrolidium-allyl monomer may include allyl and pyrrolidium within one monomer. For example, a pyrrolidium-acrylate monomer may include acrylate and pyrrolidium within one monomer. For example, an ammonium-allyl monomer may include allyl and ammonium within one monomer. For example, an ammonium-acrylate monomer may include acrylate and ammonium within one monomer.

According to one embodiment, the ionic monomer may include, as a cationic monomer, 1-allyl-1-methylpyrrolidium, dimethyl[2-(methacryloyloxy)ethyl]propylaminium, or a combination thereof. For example, the cationic monomer may be dimethyl[2-(methacryloyloxy)ethyl]propylaminium. In this case, the ionic monomer may include, as an anion, trifluoromethanesulfonyl imide (TFSI) or bis(fluorosulfonyl) imide (FSI).

According to one embodiment, a molar ratio of the repeating units (A) derived from the cross-linkable monomer to the repeating units (B) derived from the ionic monomer included in the cross-linked polymer may be 5:5 to 9:1. For example, the molar ratio of the repeating units (A) derived from the cross-linkable monomer included in the crosslinked polymer to the repeating units (B) derived from the ionic monomer may be 5:5 to 8:2, 5:5 to 7:3, or more than 5:5 and less than or equal to 7:3. For example, when the molar ratio of the repeating units (A) derived from a cross-linkable monomer to the repeating units (B) derived from an ionic monomer included in the cross-linked polymer is satisfied, the number of moles of the repeating units (A) derived from a cross-linkable monomer may be greater than or equal to the number of moles of the repeating units (B) derived from an ionic monomer. For example, when the number of moles of the repeating units (A) derived from a cross-linkable monomer is greater than or equal to the number of moles of the repeating units (B) derived from an ionic monomer, the content of unreacted monomers decreases, so that the polymer electrolyte including the crosslinked polymer may have improved high-temperature stability. According to one embodiment, the number of moles of the repeating units (A) derived from the cross-linkable monomer may be greater than the number of moles of the repeating units (B) derived from the ionic monomer.

The polymer electrolyte may further include one or more selected from an organic solvent, an ionic liquid, a polymer ionic liquid, and inorganic particles.

The polymer electrolyte according to one embodiment further include a lithium salt. Here, the amount of the lithium salt is 20 to 100 parts by weight based on 100 parts by weight of the copolymer. For example, when the polymer electrolyte includes a lithium salt, the polymer electrolyte may be a polymer solid electrolyte including the lithium salt.

The polymer solid electrolyte may, for example, include a mixture of a lithium salt and the cross-linked polymer described above. The polymer solid electrolyte may be, for example, a polymer electrolyte not including a liquid electrolyte.

According to one embodiment, the polymer solid electrolyte may include a polymer in addition to the cross-linked polymer described above. For example, the polymer may be polyethylene oxide (PEO), polyvinylidene fluoride (PVDF), vinylidene fluoride-hexafluoropropylene (PVDF-HFP), polyethylene oxide (PEO), poly(styrene-b-ethylene oxide) block copolymer (PS-PEO), poly(styrene-butadiene), poly(styreneisoprene-styrene), poly(styrene-b-divinylbenzene) block copolymer, poly(styrene-ethylene oxide-styrene) block copolymer, poly(styrene sulfonate) (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone) (SPAEKK), sulfonated poly(aryl ether ketone) (SPAEK), poly[bis(benzimidazobenzisoquinolinones)] (SPBIBI), lithium 9,10-diphenylanthracene-2-sulfonate (DPASLi+), or a combination thereof, but is not limited thereto, and any polymer electrolyte used in the art may be used.

For example, the lithium salt may be any lithium salt used in the art. The lithium salt may include, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each 1 to 20), LiCl, LiI, or a mixture thereof.

According to one embodiment, the polymer electrolyte may further include a liquid electrolyte. For example, the polymer electrolyte may be a gel polymer electrolyte including the above-described cross-linked polymer and a liquid electrolyte. For example, the liquid electrolyte may be arranged within a cross-linked network formed by the crosslinked polymer.

According to one embodiment, the liquid electrolyte may include an organic solvent or an ionic liquid. For example, the liquid electrolyte may further include a lithium salt. For example, the liquid electrolyte may be an ionic liquid, an organic solvent, a mixture of a lithium salt and an organic solvent, a mixture of an ionic liquid and an organic solvent, or a mixture of a lithium salt, an ionic liquid, and an organic solvent.

According to one embodiment, the organic solvent may be any organic solvent used in the art. The organic solvent may include, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

For example, the ionic liquid refers to a salt that is liquid at room temperature or a room-temperature molten salt, which has a melting point equal to or below room temperature and is composed only of ions. The ionic liquid may include one or more selected from compounds including, for example, a) one or more cations selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof, and b) one or more anions selected from BF4-, PF6-, AsF6-, SbF6-, AlCl4-, HSO4-, ClO4-, CH3SO3-, CF3CO2-, Cl-, Br-, I-, BF4-, SO4-, CF3SO3-, (FSO2)2N-, (C2F5SO2)2N-, (C2F5SO2)(CF3SO2)N-, and (CF3SO2)2N-.

For example, the polymer solid electrolyte may be impregnated into an electrolyte solution in a lithium battery,

thereby forming the gel polymer electrolyte. The gel polymer electrolyte may further include inorganic particles.

According to one embodiment, the polymer electrolyte may further include a solid electrolyte.

The solid electrolyte is, for example, an oxide-based solid electrolyte, a sulfide-based solid electrolyte, or a combination thereof.

The solid electrolyte is, for example, an oxide-based solid electrolyte. The oxide-based solid electrolyte is one or more selected from $Li_{1+x+y}Al_xTi_{2-x}Si_yP_{3-y}O_{12}$ ($0<x<2$, $0\leq y<3$), $BaTiO_3$, $Pb(Zr,Ti)O_3$(PZT), $Pb_{1-x}La_xZr_{1-y}Ti_yO_3$(PLZT) ($0\leq x<1$, $0\leq y<1$), $PB(Mg_3Nb_{2/3})O_3$-$PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ ($0<x<2$, $0<y<3$), $Li_xAl_yTi_z(PO_4)_3$ ($0<x<2$, $0<y<1$, $0<z<3$), $Li_{1+x+y}(Al, Ga)_x(Ti, Ge)_{2-x}SiyP_{3-y}O_{12}$ ($0\leq x\leq 1$, $0\leq y\leq 1$), $Li_xLa_yTiO_3$ ($0<x<2$, $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (M = Te, Nb, or Zr, and x is an integer from 1 to 10). The solid electrolyte is manufactured by a sintering method and the like. For example, the oxide-based solid electrolyte is a Garnet-type solid electrolyte selected from $Li_7La_3Zr_2O_{12}$(LLZO) and $Li_{3+x}La_3Zr_{2-a}M_aO_{12}$ (M doped LLZO, M=Ga, W, Nb, Ta, or Al, x is an integer from 1 to 10, and $0<a<2$).

The sulfide-based solid electrolyte may include, for example, lithium sulfide, silicon sulfide, phosphorus sulfide, boron sulfide, or a combination thereof. The sulfide-based solid electrolyte particles may include $Li_2S$, $P_2S_5$, $SiS_2$, $GeS_2$, $B_2S_3$, or a combination thereof. The sulfide-based solid electrolyte particles may be $Li_2S$ or $P_2S_5$. The sulfide-based solid electrolyte particles are known to have higher lithium ionic conductivity than other inorganic compounds. For example, the sulfide-based solid electrolyte include $Li_2S$ and $P_2S_5$. When the sulfide-based solid electrolyte material constituting the sulfide-based solid electrolyte includes $Li_2S$-$P_2S_5$, the mixing molar ratio of $Li_2S$ to $P_2S_5$ may be, for example, in a range of about 50:50 to about 90:10. In addition, an inorganic solid electrolyte may be used as the sulfide-based solid electrolyte, wherein the inorganic solid electrolyte is manufactured by adding $Li_3PO_4$, halogen, a halogen compound, $Li_{2+2x}Zn_{1-x}GeO_4$ ("LISICON", $0\leq x<1$), $Li_{3+y}PO_{4-x}N_x$("LIPON", $0<x<4$, $0<y<3$), $Li_{3.25}Ge_{0.25}P_{0.75}S_4$("ThioLISICON"), $Li_2O$-$Al_2O_3$-$TiO_2$-$P_2O_5$ ("LATP") and the like to an inorganic solid electrolyte of $Li_2S$-$P_2S_5$, $SiS_2$, $GeS_2$, $B_2S_3$, or a combination thereof. Non-limiting examples of the sulfide-based solid electrolyte material includes: $Li_2S$-$P_2S_5$; $Li_2S$-$P_2S_5$-LiX (X = halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$ - $P_2S_5$-$Z_mS_n$ ($0<m<10$, $0<n<10$, Z=Ge, Zn, or Ga); $Li_2S$-$GeS_2$; $Li_2S$-$SiS_2$-$Li_3PO_4$; and $Li_2S$-$SiS_2$-$Li_pMO_q$ ($0<p<10$, $0<q<10$, M=P, Si, Ge, B, Al, Ga, or In). In this regard, the sulfide-based solid electrolyte material may be manufactured by treating the raw starting material of the sulfide-based solid electrolyte material (for example, $Li_2S$, $P_2S_5$, etc.) through a melt quenching method, a mechanical milling method, or the like. In addition, a calcination process may be performed after the above treatment. The sulfide-based solid electrolyte may be amorphous, crystalline, or a mixed state thereof.

According to one embodiment, the polymer electrolyte is useful as a polymer electrolyte of a lithium battery. For example, the lithium battery may be a lithium metal battery or a negative electrode-free lithium metal battery.

For example, the lithium battery may include a lithium-air battery, a lithium-ion battery, a lithium polymer battery, a lithium-sulfur battery, and the like, all of which use a lithium electrode.

The polymer electrolyte according to one embodiment may be used as an electrolyte or a protective film for a lithium electrode. The polymer electrolyte may have excellent interfacial characteristics and a high lithium transfer constant, and thus have excellent lithium ion transfer capabilities.

[Method of manufacturing polymer electrolyte]

A method of manufacturing a polymer electrolyte according to one embodiment will be described.

A cross-linkable monomer including two or more double bond functional groups including an ester bond and an ionic monomer including an ionic functional group and one double bond functional group are mixed, a polymerization initiator is added thereto to obtain a polymer electrolyte composition, and a polymerization reaction of the composition is performed. The cross-linkable monomer including two or more double bond functional groups including an ester bond and the ionic monomer including an ionic functional group and one double bond functional group are controlled in a mixing ratio to correspond to the mixing ratio of the repeating unit (A) and the repeating unit (B) in the desired cross-linked polymer.

According to one embodiment, in the composition, the molar ratio of the cross-linkable monomer including two or more double bond functional groups including an ester bond to the ionic monomer including the ionic functional group and one double bond functional group may be 5:5 to 9:1, 5:5 to 8:1, 5:5 to 7:3, or more than 5:5 and less than or equal to 7:3.

For a description of a cross-linkable monomer including two or more double bond functional groups including an ester bond and an ionic monomer including an ionic functional group and one double bond functional group, refer to the above-mentioned description.

The polymerization reaction may proceed by applying heat or irradiating light such as UV. Here, heat or light may be applied within a range that does not negatively affect the lithium metal electrode. For example, the polymerization reaction may proceed by applying heat.

The polymerization reaction may be a copolymerization reaction, a crosslinking reaction, or a grafting reaction.

When applying heat or irradiating light such as UV to perform a polymerization reaction, the heat or light may be applied within a range that does not negatively affect the lithium metal electrode.

According to another embodiment, it is also possible to perform a polymerization reaction of the polymers by irradiation of light at room temperature (25 °C). A photopolymerization initiator is used when the crosslinking reaction is performed by irradiating light. The photopolymerization initiator may be used without limitation in the composition thereof as long as it is a compound that may form radicals by light such as ultraviolet light. As the photopolymerization initiator, for example, one or more selected from the group consisting of 2-hydroxy 2-methyl-1-phenyl-propan-1-one (HMPP), benzoin ether, dialkyl acetophenone, hydroxyl alkylketone, phenyl glyoxylate, benzyl dimethyl ketal, acyl phosphine, and α-aminoketone may be used. The acyl phosphine may be, for example, 2,4,6-trimethyl-benzoyl-trimethyl phosphine oxide.

As the thermal polymerization initiator, one or more selected from the group of initiators consisting of a persulfate-based initiator, an azo-based initiator, hydrogen peroxide, and ascorbic acid may be used. Specifically, examples of the persulfate-based initiator include sodium persulfate (Na2S2O8), potassium persulfate (K2S2O8), and ammonium persulfate ((NH4)2S2O8), and examples of the azo-based initiator include 2, 2-azobis(2-amidinopropane) dihydrochloride, 2,2-azobis-(N, N-dimethylene)isobutyramidine dihydrochloride, 2-(carbamoylazo)isobutylonitril, 2,2-azobis[2-(2-imidazolin-2-yl)propane] dihydrochloride, and 4,4-azobis-(4-cyanovaleric acid).

A lithium salt is added to the polymer electrolyte composition.

A liquid electrolyte is added to the polymer electrolyte composition.

For descriptions of the lithium salt and the liquid electrolyte, refer to the above-mentioned description.

[Lithium battery]

A lithium battery according to one embodiment includes: a positive electrode; a negative electrode; and the above-described solid electrolyte arranged between the positive electrode and the negative electrode. By including the above-described solid electrolyte, a lithium battery may simultaneously have improved capacity and excellent room temperature and high temperature lifespan characteristics.

The lithium battery may be, but is not limited to, a lithium primary battery, a lithium secondary battery, a lithium-sulfur battery, a lithium-air battery, and the like, and any lithium battery used in the art may be used.

The lithium battery is manufactured by, for example, the following exemplary methods, but the methods are not necessarily limited to these methods and are adjusted according to required conditions.

Referring to FIGS. 2 and 3, a lithium battery according to one embodiment will be described in detail.

For example, referring to FIG. 2, the lithium battery may be a negative electrode-free lithium metal battery 100. For example, referring to FIG. 3, the lithium battery may be a lithium metal battery 200.

A lithium battery according to one embodiment may include: a positive electrode; a negative electrode; and the above-described polymer electrolyte arranged between the positive electrode and the negative electrode.

According to one embodiment, the polymer electrolyte may have a form of solid, liquid, or gel.

As shown in FIG. 2, a lithium battery 100 according to one embodiment may include: a negative electrode current collector 110; a polymer electrolyte 120 arranged on the negative electrode current collector 110; and a positive electrode 150 arranged on the polymer electrolyte 120. In this case, the negative electrode may include a negative electrode current collector 110 in which a negative electrode active material layer is free, and the positive electrode 250 may include a positive electrode current collector 140 and a positive electrode active material layer 130 arranged on the positive electrode current collector 140.

A lithium battery 200 according to one embodiment may further include a lithium metal layer 225 arranged between a negative electrode current collector 210 and an electrolyte 220, as shown in FIG. 3. In this case, the negative electrode may include: a negative electrode current collector 210; and a lithium metal layer 225 arranged between the negative electrode current collector 210 and the electrolyte 220. For example, a lithium battery 200 may include a negative electrode current collector 110, a lithium metal layer 225 arranged on the negative electrode current collector 110, a polymer electrolyte 120 arranged on the lithium metal layer 225, and a positive electrode 150 arranged on the polymer electrolyte 120. For example, the lithium metal layer 225 may include lithium metal or a lithium alloy. For example, the metal layer 225 may dissociate into lithium ions and metal cations during the discharging process, thereby reducing the thickness of the lithium metal layer 225. Conversely, lithium ions may be plated on the lithium metal layer 225 during the charging process, thereby increasing the thickness of the lithium metal layer 225.

According to one embodiment, a lithium battery 100, 200 including the above-described polymer electrolyte may further include a protective layer (not shown) arranged between the negative electrode and the polymer electrolyte through the charging and discharging process.

Referring to FIG. 2, the protective layer (not shown) may be formed between the negative electrode current collector 110 and the polymer electrolyte 120.

For example, the protective layer (not shown) may be formed between the lithium metal layer 225 and the polymer electrolyte 120.

[Negative electrode current collector 110, 210]

For example, the material constituting the negative electrode current collector 110, 210, e.g., a metal substrate may be any material that does not react with lithium, that is, does not form an alloy or compound with lithium, and is conductive. The metal substrate may be, for example, a metal or an alloy. The metal substrate may be made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The electrode current collector 200 may have a form selected from, for example, a sheet, a foil, a film, a plate, a porous body, a mesoporous body, a body containing through holes, a polygonal ring body, a mesh body, a foam body, and a non-woven body, but is not necessarily limited to such a form, and any form used in the art may be used.

For example, the negative electrode current collector 110, 210 may have a reduced thickness compared to the negative electrode current collector included in a conventional negative electrode. Therefore, for example, by including a thin-film current collector, the negative electrode according to the present disclosure is distinguished from a conventional electrode including a thick film current collector. When a thin-film current collector having a reduced thickness is used in the electrode according to one embodiment, the negative electrode including the thin-film current collector has a relatively increased thickness of the negative electrode active material layer. As a result, the energy density of the lithium metal battery employing such an electrode increases. The thickness of the negative electrode current collector 110, 210 may be, for example, less than 15 μm, 14.5 μm or less, or 14 μm or less. The thickness of the negative electrode current collector 110, 210 may be, for example, 0.1 μm to less than 15 μm, 1 μm to 14.5 μm, 2 μm to 14 μm, 3 μm to 14 μm, 5 μm to 14 μm, or 10 μm to 14 μm.

The material constituting the negative electrode current collector 110, 210 may be any material that does not react with lithium, that is, does not form an alloy or compound with lithium, and is conductive. The negative electrode current collector 110, 210 is, for example, a metal or an alloy. The negative electrode current collector 210 may be made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

The negative electrode current collector 110, 210 may have a form selected from, for example, a sheet, a foil, a film, a plate, a porous body, a mesoporous body, a body containing through holes, a polygonal ring body, a mesh body, a foam body, and a non-woven body, but is not necessarily limited to such a form, and any form used in the art may be used.

The negative electrode current collector 110, 210 may include, for example, a base film and a metal substrate layer arranged on one or both sides of the base film. The negative electrode current collector 110, 210 includes a substrate, and the substrate may have a structure including, for example, a base film and a metal substrate layer arranged on one or both sides of the base film. An interlayer may additionally be arranged on the metal substrate layer.

For example, the base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. Since the base film includes a thermoplastic polymer, the base film may melt when a short circuit occurs, thereby suppressing a rapid increase in current. The base film may be, for example, an insulator. The metal substrate layer may include, for example, copper (Cu), stainless steel, titanium (Ti), iron (Fe), cobalt (Co), nickel (Ni), or an alloy thereof. The metal substrate layer may act as an electrochemical fuse and may be cut off in the event of overcurrent to prevent short circuits. The limit current and maximum current may be controlled by adjusting the thickness of the metal substrate layer. The metal substrate layer may be plated or deposited on the base film. As the thickness of the metal substrate layer decreases, the limit current and/or maximum current of the negative electrode current collector 110, 210 decreases, so that the stability of the lithium metal battery during a short circuit may be improved. A lead tab may be added to the metal substrate layer for external connection. The lead tab may be welded onto the metal substrate layer or the metal substrate layer/base film laminate by ultrasonic welding, laser welding, spot welding, or the like. During welding, the base film and/or metal substrate layer may melt, thereby electrically connecting the metal substrate layer to the lead tab. To make the welding between the metal substrate layer and the lead tab more solid, a metal chip may be added between the metal substrate layer and the lead tab. The metal chip may be a thin piece of the same material as the metal of the metal substrate layer. The metal chip may be, for example, a metal foil, a metal mesh, and the like. The metal chip may be, for example, aluminum foil, copper foil, steel use stainless (SUS) foil, and the like. By arranging the metal chip on the metal substrate layer and then the metal substrate layer welding with a lead tab, the lead tab may be welded to a metal chip/metal substrate layer laminate or a metal chip/metal substrate layer/base film laminate. During welding, the base film, metal layer, and/or metal chip may melt, thereby electrically connecting the metal layer or metal layer/metal chip laminate to the lead tab. A metal chip and/or lead tab may be added onto a portion of the metal substrate layer. The thickness of the base film may be, for example, 1 to 50 μm, 1.5 to 50 μm, 1.5 to 40 μm, or 1 to 30 μm. When the thickness of the base film is within thease ranges, the weight of a negative electrode assembly may be reduced more effectively. The melting point of the base film may be, for example, 100 to 300 °C, 100 to 250 °C or less, or 100 to 200 °C. When the melting point of the base film is within these ranges, the base film may melt and easily bonded to the lead tab during the process of welding the lead tab. A surface treatment, such as a corona

treatment, may be performed on the base film to improve adhesion between the base film and the metal substrate layer. The thickness of the metal substrate layer may be, for example, 0.01 to 3 μm, 0.1 to 3 μm, 0.1 to 2 μm, or 0.1 to 1 μm. When the thickness of the metal substrate layer is within these ranges, the stability of the negative electrode may be secured while maintaining conductivity. The thickness of the metal chip may be, for example, 2 to 10 μm, 2 to 7 μm, or 4 to 6 μm. When the thickness of the metal chip is within these ranges, the connection between the metal layer and the lead tab may be performed more easily. Since the negative electrode current collector 110, 210 has this structure, the weight of the electrode may be reduced, and as a result, the energy density may be improved.

According to one embodiment, a negative electrode active material layer may be free on the negative electrode current collector 110, 220 before charge and discharge is performed. For example, a lithium metal layer 225 may be free on the negative electrode current collector 110, 220 before charge and discharge is performed. For example, in the case of a negative electrode-free lithium metal battery in which the negative electrode active material layer or lithium metal layer 225 is free on the negative electrode current collector 110, 220 before charge and discharge is performed, dendrite formation may be prevented, thereby further improving the lifespan characteristics.

According to another embodiment, a lithium metal layer 225 including a plateshaped lithium metal thin film may be arranged on the negative electrode current collector 210 before charge and discharge is performed. For example, in the process of arranging a polymer electrolyte on the lithium metal layer 225 arranged on the negative electrode current collector 210, the metal cations included in the polymer electrolyte may react with the lithium metal layer 225, so that the metal cations may be plated as metal. The plated metal cations may dissociate into metal cations during discharge.

According to one embodiment, the negative electrode may further include an interlayer arranged between the negative electrode current collector 210 and the lithium metal layer 225.

According to one embodiment, the interlayer may be arranged directly on, for example, one or both sides of the negative electrode current collector 210. Therefore, another layer may not be arranged between the negative electrode current collector 210 and the interlayer. By directly arranging the interlayer on one or both sides of the negative electrode current collector 210, the adhesion between the negative electrode current collector 210 and the lithium metal layer 225 may be further improved.

The thickness of the interlayer (not shown) is, for example, 30 % or less of the thickness of the negative electrode current collector 210. The thickness of the interlayer (not shown) is, for example, 0.01 to 30 %, 0.1 to 30 %, 0.5 to 30 %, 1 to 25 %, 1 to 20 %, 1 to 15 %, 1 to 10 %, 1 to 5 %, or 1 to 3 % of the thickness of the negative electrode current collector 210. The thickness of the interlayer (not shown) is, for example, 10 nm to 5 μm, 50 nm to 5 μm, 200 nm to 4 μm, 500 nm to 3 μm, 500 nm to 2 μm, 500 nm to 1.5 μm, or 700 nm to 1.3 μm. When the thickness of the interlayer (not shown) is within these ranges, the adhesion between the negative electrode current collector 210 and the metal layer 225 may be further improved, and an increase in interface resistance may be suppressed.

For example, the interlayer may include a binder. Since the interlayer includes a binder, the adhesion between the negative electrode current collector 210 and the lithium metal layer 225 may be further improved. The binder included in the interlayer (not shown) is, for example, a conductive binder or a non-conductive binder.

The conductive binder is, for example, an ion-conductive binder and/or an electron-conductive binder. A binder that has both ionic and electronic conductivity may be classified both as an ion-conductive binder and an electron-conductive binder.

The ion-conductive binder includes, for example, poly(styrene sulfonate) (PSS), polyvinylidene fluoride-hexafluoropropylene copolymer (PVDF-HFP), polyvinyl fluoride (PVF), poly(methylmethacrylate) (PMMA), polyethylene oxide (PEO), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, and the like. The ion-conductive binder may include polar functional groups. The ion-conductive binder including polar functional groups includes, for example, Nafion, Aquivion, Flemion, Gore, Aciplex, Morgane ADP, sulfonated poly(ether ketone) (SPEEK), sulfonated poly(arylene ether ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), and the like. The electron-conductive binder includes, for example, polyacetylene, polythiophene, polypyrrole, poly(p-phenylene), poly(phenylenevinylene), poly(phenylenesulfide), polyaniline, and the like. The interlayer may be a conductive layer including, for example, a conductive polymer.

The binder included in the interlayer may be, for example, a fluorine-based binder. The fluorine-based binder included in the interlayer may be, for example, polyvinylidene fluoride (PVDF). The interlayer may be arranged on the negative electrode current collector 210 in a dry or wet manner, for example. The interlayer may be an adhesive layer including, for example, a binder.

The interlayer may additionally include, for example, a carbon-based conductive material. Since the interlayer includes a carbon-based conductive material, the interlayer may be, for example, a conductive layer. The interlayer may be a conductive layer including, for example, a binder and a carbon-based conductive material.

The interlayer may be arranged on the negative electrode current collector 210 in a dry manner, for example, by deposition such as chemical vapor deposition (CVD) or physical vapor deposition (PVD). The interlayer may be arranged

on the negative electrode current collector 210 in a wet manner, for example, by spin coating, dip coating, and the like. The interlayer may be arranged on the negative electrode current collector 210 by, for example, depositing a carbon-based conductive material on the negative electrode current collector 210. The dry-coated interlayer is made of a carbon-based conductive material and may not include a binder. Alternatively, the interlayer may be arranged on the negative electrode current collector by coating the surface of the negative electrode current collector with a composition including, for example, a carbon-based conductive material, a binder, and a solvent, and drying the same. The interlayer may be a single-layer structure or a multi-layer structure including a plurality of layers.

[Negative electrode: Lithium metal layer]

Referring to FIG. 2, the lithium battery 200 may further include a metal layer 225 arranged between the negative electrode current collector 210 and the electrolyte 220. For example, the lithium metal layer 225 may include lithium metal or a lithium alloy. For example, the lithium metal layer 225 may be a negative electrode active material layer. For example, the lithium metal layer 225 may be a lithium-plated layer.

For example, the lithium metal layer 225 may be generated when lithium ions included in the polymer electrolyte 120 are plated on the negative electrode current collector 110 as the lithium battery 200 is charged. For example, the lithium metal layer 225 may include a lithium alloy and lithium metal. For example, the lithium alloy included in the lithium metal layer 225 may reduce the reactivity of the lithium metal, thereby effectively preventing side reactions between the lithium metal layer 225 and the polymer electrolyte 120. In addition, the lithium metal layer 225 may have excellent electrical conductivity, and thus the internal resistance of a lithium battery 200 including the same may be reduced. Accordingly, the lithium battery 200 including the lithium metal layer 225 may have improved lifespan characteristics as well as charge and discharge efficiency.

According to one embodiment, the lithium metal layer 225 may include, for example, lithium foil, lithium powder, plated lithium, a carbon-based material, or a combination thereof. For example, the lithium metal layer 225 may include lithium foil. In this case, the lithium metal layer 225 may be a negative electrode active material layer. For example, the lithium metal layer 225 may be introduced by coating the negative electrode current collector 210 with a slurry including lithium powder, a binder, and the like. For example, the binder may be a fluorine-based binder such as polyvinylidene fluoride (PVDF).

According to one embodiment, the lithium metal layer 225 may include only a plated lithium metal or lithium alloy. In this case, the lithium metal layer 225 may be a lithium-plated layer.

According to one embodiment, the lithium metal layer 225 may not include a carbon-based negative electrode active material. Therefore, the lithium metal layer 225 may be made of a metal-based negative electrode active material.

For example, the thickness of the lithium metal layer 225 may be, for example, 0.1 μm to 100 μm, 0.1 μm to 80 μm, 1 μm to 80 μm, or 10 μm to 80 μm, but is not necessarily limited to these ranges and may be adjusted depending on the shape, capacity, and the like of the required lithium battery. When the thickness of the lithium metal layer 225 increases excessively, the structural stability of the lithium battery may deteriorate and side reactions may increase. When the thickness of the lithium metal layer 225 is too small, the energy density of the lithium metal battery may be reduced.

According to one embodiment, the thickness of the lithium foil included in the lithium metal layer 225 may be, for example, 1 μm to 50 μm, 1 μm to 30 μm, 10 μm to 30 μm, or 10 μm to 80 μm. When the thickness of the lithium foil is within these ranges, the lifespan characteristics of the lithium battery may be further improved.

According to one embodiment, the particle diamter of the lithium powder included in the lithium metal layer 225 may be, for example, 0.1 μm to 3 μm, 0.1 μm to 2 μm, or 0.1 μm to 2 μm. When the thickness of the lithium powder is within these ranges, the lifespan characteristics of the lithium battery may be further improved.

[Polymer electrolyte 120]

For example, the polymer electrolyte 120 may include a cross-linked polymer as described above. The polymer electrolyte 120 may include a cross-linked network formed by the cross-linked polymer.

According to another embodiment, the polymer electrolyte 120 may further include a non-woven fabric. The non-woven fabric may act to support one or more selected from lithium metal and lithium alloys that are plated during the charging process. For example, use of the non-woven fabric may be omitted. For example, when the negative electrode current collector is of the mesh type, it is not necessary to use non-woven fabric.

The non-woven fabric may have a porosity of 10 to 90 %, for example, 10 to 80 %, for example, 10 to 50 % by volume, for example, 25 to 50 % by volume, and an average pore size of 0.1 to 10 μm, for example, 0.01 to 8 μm, for example, 0.1 to 1.0 μm. The average pore size represents a diameter when the pore shape is spherical, and represents a major axis length when the pore shape is non-spherical.

According to one embodiment, the non-woven fabric may include one or more non-woven fabrics selected from cellulose, polyester (for example, polyethylene terephthalate (PET), polyetherimide, polyethylene, polypropylene, polyethylene terephthalate, polybutylene terephthalate, polyamide, polyacetal, polycarbonate, polyimide, polyetherketone, polyethersulfone, polyphenylene oxide, polyphenylene sulfide, polyethylene naphthalene, polytetrafluoroethylene, polyvinylidene fluoride, polyvinyl chloride, polyacrylonitrile, nylon, and polyparaphenylene benzobisoxazole.

[Positive electrode]

As shown in FIGS. 2 and 3, a positive electrode active material layer 130, 230 is arranged on a positive electrode current collector 140, 240 to form a positive electrode 150, 250. More specifically, a positive electrode active material layer 130, 230 may be arranged on a polymer electrolyte 120, 220, and a positive electrode current collector 140, 240 may be arranged on the positive electrode active material layer 130, 230.

[Positive electrode: Positive electrode current collector]

Referring to FIGS. 2 and 3, the positive electrode 150, 250 includes a positive electrode current collector 140, 240. For example, a positive electrode 150, 250 may be prepared by forming the positive electrode active material layer 130, 230 on the positive electrode current collector 140, 240.

For example, the positive electrode current collector 140, 240 may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

According to one embodiment, the positive electrode current collector 140, 240 may include Al.

For example, the positive electrode current collector 140, 240 may include a base film and a metal substrate layer arranged on one or both sides of the base film, similar to the negative electrode current collector 110, 220 described above.

[Positive electrode: Positive electrode active material layer]

The positive electrode active material layer 130, 230 may include a positive electrode active material, a conductive material, and a binder.

For example, the positive electrode active material may use one or more of a composite oxide of lithium and a metal selected from cobalt, manganese, nickel, and a combination thereof, and specific examples thereof may include compounds represented by any one of the following formulae: $Li_aA_{1-b}B^1_bD^1_2$ (wherein $0.90 \leq a \leq 1.8$, and $0 \leq b \leq 0.5$); $Li_aE_{1-b}B^1_bO_{2-c}D^1_c$ (wherein $0.90 \leq a \leq 1.8$, $0 \leq b \leq 0.5$, and $0 \leq c \leq 0.05$); $LiE_{2-b}B^1_bO_{4-c}D^1_c$ (wherein $0 \leq b \leq 0.5$, and $0 \leq c \leq 0.05$); $Li_aNi_{1-b-c}Co_bB^1_cD^1_\alpha$ (wherein $0.90 \leq a \leq 1.8$, $0 \leq b \leq 0.5$, $0 \leq c \leq 0.05$, and $0 < \alpha \leq 2$); $Li_aNi_{1-b-c}Co_bB'_cO_{2-\alpha}F^1_\alpha$ (wherein $0.90 \leq a \leq 1.8$, $0 \leq b \leq 0.5$, $0 \leq c \leq 0.05$, and $0 < \alpha < 2$); $Li_aNi_{1-b-c}Co_bB^1_cO_{2-\alpha}F^1_2$ (wherein $0.90 \leq a \leq 1.8$, $0 \leq b \leq 0.5$, $0 \leq c \leq 0.05$, and $0 < \alpha < 2$); $Li_aNi_{1-b-c}Mn_bB^1_cD_\alpha$ (wherein $0.90 \leq a \leq 1.8$, $0 \leq b \leq 0.5$, $0 \leq c \leq 0.05$, and $0 < \alpha \leq 2$); $Li_aNi_{1-b-c}Mn_bB'_cO_{2-\alpha}F^1_\alpha$ (wherein $0.90 \leq a \leq 1.8$, $0 \leq b \leq 0.5$, $0 \leq c \leq 0.05$, and $0 < \alpha < 2$); $Li_aNi_{1-b-c}Mn_bB^1_cO_{2-\alpha}F^1_2$ (wherein $0.90 \leq a \leq 1.8$, $0 \leq b \leq 0.5$, $0 \leq c \leq 0.05$, and $0 < \alpha < 2$); $Li_aNi_bE_cG_dO_2$ (wherein $0.90 \leq a \leq 1.8$, $0 \leq b \leq 0.9$, $0 \leq c \leq 0.5$, and $0.001 \leq d \leq 0.1$); $Li_aNi_bCo_cMn_dGeO_2$ (wherein $0.90 \leq a \leq 1.8$, $0 \leq b \leq 0.9$, $0 \leq c \leq 0.5$, $0 \leq d \leq 0.5$, and $0.001 \leq e \leq 0.1$.); $Li_aNiG_bO_2$ (wherein $0.90 \leq a \leq 1.8$, and $0.001 \leq b \leq 0.1$); $Li_aCoG_bO_2$ (wherein $0.90 \leq a \leq 1.8$, and $0.001 \leq b \leq 0.1$); $Li_aMnG_bO_2$ (wherein $0.90 \leq a \leq 1.8$, and $0.001 \leq b \leq 0.1$); $Li_aMn_2G_bO_4$ (wherein $0.90 \leq a \leq 1.8$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3 (0 \leq f \leq 2)$; $Li_{(3-f)}Fe_2(PO_4)_3 (0 \leq f \leq 2)$; and $LiFePO_4$.

In the formulae above, A may be Ni, Co, Mn, or a combination thereof; $B^1$ may be Al, Ni, Co, Mn, Cr, Fe, Mg, Sr, V, Ga, Si, W, Mo, Cu, Zn, Ti, boron (B), a rare earth element, or a combination thereof; $D^1$ may be O, F, S, P, or a combination thereof; E may be Co, Mn, or a combination thereof; $F^1$ may be F, S, P, Cl, Br, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; J may be V, Cr, Mn, Co, Ni, Cu, or a combination thereof.

For example, the positive electrode active material may include a lithium transition metal oxide including nickel and other transition metals. In a lithium transition metal oxide including nickel and other transition metals, the amount of nickel may be 60 mol% or more, for example, 75 mol% or more, for example, 80 mol% or more, for example, 85 mol% or more, for example, 90 mol% or more, based on the total number of moles of the transition metals.

For example, the lithium transition metal oxide may be a compound represented by Formula 3:

Formula 3 $$Li_aNi_xCo_yM_zO_{2-b}A_b$$

wherein, in Formula 3, $1.0 \leq a \leq 1.2$, $0 \leq b \leq 0.2$, $0.6 \leq x < 1$, $0 \leq y \leq 0.3$, $0 < z \leq 0.3$, $x+y+z=1$, and M is one or more selected from the group consisting of manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and A is F, S, Cl, Br, or a combination thereof.

In Formula 3, for example, $0.7 \leq x < 1$, $0 < y \leq 0.3$, $0 < z \leq 0.3$; $0.8 \leq x < 1$, $0 < y \leq 0.3$, $0 < z \leq 0.3$; $0.8 \leq x < 1$, $0 < y \leq 0.2$, $0 < z \leq 0.2$; $0.83 \leq x < 0.97$, $0 < y \leq 0.15$, $0 < z \leq 0.15$; or $0.85 \leq x < 0.95$, $0 < y \leq 0.1$, $0 < z \leq 0.1$.

For example, the lithium transition metal oxide may be at least one of the compounds represented by Formulae 3-1 and 3-2:

Formula 3-1 $LiNi_xCo_yMn_zO_2$

wherein, in Formula 3-1, $.6 \leq x \leq 0.95$, $0 < y \leq 0.2$, and $0 < z \leq 0.1$. For example, $0.7 \leq x \leq 0.95$, $0 < y \leq 0.3$, and $0 < z \leq 0.3$.

Formula 3-2 $LiNi_xCo_yAl_zO_2$

wherein, in Formula 3-2, $0.6 \leq x \leq 0.95$, $0 < y \leq 0.2$, and $0 < z \leq 0.1$. For example, $0.7 \leq x \leq 0.95$, $0 < y \leq 0.3$, and $0 < z \leq 0.3$. For example, $0.8 \leq x \leq 0.95$, $0 < y \leq 0.3$, and $0 < z \leq 0.3$. For example, $0.82 \leq x \leq 0.95$, $0 < y \leq 0.15$, and $0 < z \leq 0.15$. For example, $0.85 \leq x \leq 0.95$, $0 < y \leq 0.1$, and $0 < z \leq 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, or $LiNi_{0.88}Co_{0.1}Al_{0.02}O_2$.

For example, the positive electrode active material may be one having a coating layer on the surface of the lithium transition metal oxide, or one in which the lithium transition metal oxide and the lithium transition metal oxide having a coating layer are mixed.

For example, the coating layer may include a coating element compound of an oxide of the coating element, a hydroxide of the coating element, an oxyhydroxide of the coating element, an oxycarbonate of the coating element, or a hydroxycarbonate of the coating element.

For example, the compound forming the coating layer may be amorphous or crystalline. The coating element included in the coating layer may include Mg, Al, Co, K, Na, Ca, Si, Ti, V, Sn, Ge, Ga, B, As, Zr, or a mixture thereof. For the process of forming the coating layer, any coating method (for example, spray coating, dipping method, etc.) may be used as long as the coating method does not adversely affect the physical properties of the positive active material when the coating elements are used in the lithium transition metal oxide, and as this is well-understood by persons skilled in the art, a detailed explanation has been omitted.

Carbon black, graphite particulates, and the like may be used as the conductive material, but are not limited thereto, and any material that may be used as a conductive material in the art may be used.

As the binder, vinylidene fluoride/hexafluoropropylene copolymer, polyvinylidene fluoride (PVDF), polyacrylonitrile, poly(methylmethacrylate), polytetrafluoroethylene, and a mixture thereof, or styrene butadiene rubber-based polymers may be used, but are not limited thereto, and any binder that may be used in the art may be used.

[Separator]

A lithium battery according to one embodiment may further include a separator (not shown).

Specific examples of the separator may include multilayer films of two or more layers of polyethylene, polypropylene, polyvinylidene fluoride, or a combination thereof, and mixed multilayer films such as a polyethylene/polypropylene two-layer separator, a polyethylene/polypropylene/polyethylene three-layer separator, a polypropylene/polyethylene/polypropylene three-layer separator, and the like.

According to one embodiment, the battery case including the lithium battery may be cylindrical, prismatic, thin-film type, or the like. For example, the lithium battery may be a large-sized thin-film battery. The lithium battery may be a lithium ion battery.

According to an embodiment, the lithium battery 100, 200 may include, for example, a lithium-air battery, a lithium-sulfur battery, and the like.

According to one embodiment, a lithium battery 100, 200 may be used in an electric vehicle (EV) due to its excellent lifespan characteristics and high-rate characteristics. For example, the lithium battery 100, 200 may be used in hybrid vehicles such as a plug-in hybrid electric vehicle (PHEV). In addition, the lithium battery 100, 200 may be used in fields that require large amounts of power storage. For example, the lithium battery 100, 200 may be used in electric bicycles, power tools, and the like.

When stacking multiple lithium batteries (100, 200) according to one embodiment, a gel-type electrolyte may be arranged between the positive electrode and the liquidimpermeable ion-conductive composite membrane. The gel-type electrolyte may include, for example, a VDF-HFP copolymer, a lithium salt, and a solvent.

Referring to FIG. 4, a lithium battery 1 according to one embodiment includes a positive electrode 3, the above-described negative electrode 2, and a separator 4. The positive electrode 3, negative electrode 2, and separator 4 are wound or folded to form a battery structure 7. The formed battery structure 7 is accommodated in the battery case 5. A

polymer electrolyte is injected into the battery case 5 and sealed with a cap assembly 6, thereby completing the lithium battery 1. The battery case 5 is cylindrical, but is not necessarily limited to this shape, and may be, for example, prismatic, thin-film type, or the like.

For example, a positive electrode 3, a negative electrode 2, and a polymer electrolyte including a separator 4 are wound or folded to form a battery structure 7. The formed battery structure 7 is accommodated in the battery case 5. A liquid electrolyte is injected into the battery case 5 and sealed with a cap assembly 6, thereby completing the lithium battery 1. The battery case 5 is cylindrical, but is not necessarily limited to this shape, and may be, for example, prismatic, thin-film type, or the like.

Referring to FIG. 5, a lithium battery 1 according to one embodiment includes a positive electrode 3, the above-described negative electrode 2, and a separator 4. A separator 4 is arranged between the positive electrode 3 and the negative electrode 2, and the positive electrode 3, the negative electrode 2, and the separator 4 are wound or folded to form a battery structure 7. The formed battery structure 7 is accommodated in the battery case 5. The battery structure 7 may include an electrode tab 8 that acts as an electrical path for inducing the current formed in the battery structure 7 to the outside. The polymer electrolyte described above is injected into the battery case 5 and sealed to complete the lithium battery 1.

For example, after a polymer electrolyte including a separator 4 is arranged between a positive electrode 3 and a negative electrode 2, the positive electrode 3, the negative electrode 2, and the separator 4 are wound or folded to form a battery structure 7. The formed battery structure 7 is accommodated in the battery case 5. The battery structure 7 may include an electrode tab 8 that acts as an electrical path for inducing the current formed in the battery structure 7 to the outside. Also, a liquid electrolyte may be injected into the battery case 5 and sealed to complete the lithium battery 1. The battery case 5 is prismatic, but is not necessarily limited to this shape, and may be, for example, cylindrical, thin-film type, or the like.

Referring to FIG. 6, a lithium battery 1 according to one embodiment includes a positive electrode 3, the above-described negative electrode 2, and a separator 4. The above-described polymer electrolyte including a separator 4 is arranged between the positive electrode 3 and the negative electrode 2, thereby forming a battery structure. The battery structure 7 is stacked in a bi-cell structure and then accommodated in a battery case 5. The battery structure 7 may include an electrode tab 8 that acts as an electrical path for inducing the current formed in the battery structure 7 to the outside. A liquid electrolyte is injected into the battery case 5 and sealed to complete the lithium battery 1. The battery case 5 is prismatic, but is not necessarily limited to this shape, and may be, for example, cylindrical, thin-film type, or the like.

A pouch-type lithium battery corresponds to the lithium batteries of FIGS. 4 to 6 each using a pouch as the battery case. The pouch-type lithium battery includes one or more battery structures. A polymer electrolyte is arranged between the positive and negative electrodes to form a battery structure. The battery structure is stacked in a bi-cell structure, then impregnated with a liquid electrolyte, and accommodated and sealed in a pouch to complete a pouch-type lithium battery. For example, although not shown in the drawing, the positive electrode, the negative electrode, and the polymer electrolyte including a separator as described above may be simply stacked and accommodated in a pouch in the form of an electrode assembly, or may be wound or folded into a jellyrollshaped electrode assembly and then accommodated in a pouch. Then, a liquid electrolyte is injected into the pouch and sealed to complete the lithium battery.

The lithium battery is used in an electric vehicle (EV), for example, due to its excellent lifespan characteristics and high-rate characteristics. For example, the lithium battery is used in hybrid vehicles such as a plug-in hybrid electric vehicle (PHEV). In addition, the lithium battery is used in fields that require large amounts of power storage. For example, the lithium battery is used in electric bicycles, power tools, and the like.

The lithium batteries are stacked in multiple layers to form a battery module, and a plurality of the battery modules form a battery pack. These battery packs may be used in any device that requires high capacity and high output. For example, the battery packs may be used in laptops, smartphones, electric vehicles, or the like. The battery module includes, for example, a plurality of batteries and a frame that holds them. The battery pack includes, for example, a plurality of the battery modules and a bus bar connecting them. The battery module and/or battery pack may further include a cooling device. A plurality of the battery packs are controlled by a battery management system. The battery management system includes a battery pack and a battery control device connected to the battery pack.

Hereinafter, the definitions of substituents used in the formulae will be described.

The term "alkyl" as used in the formulae refers to a fully saturated branched or unbranched (or straight-chain or linear) hydrocarbon.

Non-limiting examples of the alkyl may include methyl, ethyl, n-propyl, isopropyl, n-butyl, isobutyl, sec-butyl, n-pentyl, isopentyl, neopentyl, iso-amyl, n-hexyl, 3-methylhexyl, 2,2-dimethylpentyl, 2,3-dimethylpentyl, n-heptyl, and the like.

One or more hydrogen atoms of the alkyl group may be substituted with a halogen atom, a C1-C20 alkyl group substituted with a halogen atom (for example, $CCF_3$, $CHCF_2$, $CH_2F$, $CCl_3$, etc.), a C1-C20 alkoxy, a C2-C20 alkoxyalkyl, a hydroxy group, a nitro group, a cyano group, an amino group, an amidino group, a hydrazine, a hydrazone, a carboxyl group or a salt thereof, a sulfonyl group, a sulfamoyl group, a sulfonic acid group or a salt thereof, a phosphoric acid or a salt

thereof, or a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, a C7-C20 heteroarylalkyl group, a C6-C20 heteroaryloxy group, a C6-C20 heteroaryloxyalkyl group, or a C6-C20 heteroarylalkyl group.

The term "halogen atom" includes fluorine, bromine, chlorine, iodine, and the like.

The term "C1-C20 alkyl group substituted with a halogen atom" refers to a C1-C20 alkyl group substituted with one or more halo groups, including, but not limited to, polyhaloalkyl containing monohaloalkyl, dihaloalkyl, or perhaloalkyl.

The monohaloalkyl refers to an alkyl group having one iodine, bromine, chlorine, or fluorine, while dihaloalkyl and polyhaloalkyl refer to an alkyl group having two or more identical or different halo atoms.

The term "aryl group" as used in the formulae, is used alone or in combination to mean an aromatic hydrocarbon including one or more rings.

The term "aryl" also includes groups in which an aromatic ring is fused to one or more cycloalkyl rings.

Non-limiting examples of the aryl include phenyl, naphthyl, tetrahydronaphthyl, and the like.

In addition, one or more hydrogen atoms of the aryl group may be substituted with a substituent similar to that in the case of the above-described alkyl group.

One or more hydrogen atoms of the carbon rings may be substituted with a substituent similar to that in the case of the above-described alkyl group.

The present disclosure will be described in more detail through the following Examples and Comparative Examples. However, Examples are for illustrating the present disclosure and the present disclosure are not limited thereto.

Manufacturing Example 1: Manufacture of polymer electrolyte

Trimethylolpropane trimethacrylate (TMPTMA) represented by Compound 1-1 as a cross-linkable monomer, and dimethyl[2-(methacryloyloxy)ethyl]propylaminium-bis(fluorosulfonyl) imide represented by Compound 2-1 as an ionic monomer were mixed with a liquid electrolyte. The liquid electrolyte was prepared by dissolving 1.15 M $LiPF_6$ in a mixed solution of EC/EMC/DEC (3:5:2). The ratio of the weight of the liquid electrolyte to the total weight of TMPTMA represented by Compound 1-1 and dimethyl[2-(methacryloyloxy)ethyl]propylaminium-bis(fluorosulfonyl) imide represented by Compound 2-1 was 95:5. The mixing ratio of TMPTMA represented by Compound 1-1 and dimethyl[2-(methacryloyloxy)ethyl]propylaminium-bis(fluorosulfonyl) imide represented by Compound 2-1 was a molar ratio of about 7:3.

Tert-butyl peroxypivalate was added as a thermal polymerization initiator to the mixture to obtain a polymer electrolyte composition. The amount of the thermal polymerization initiator was 5 parts by weight based on 100 parts by weight of the total weight of TMPTMA represented by Compound 1-1 and dimethyl[2- (methacryloyloxy)ethyl]propylaminium-bis(fluorosulfonyl) imide represented by Compound 2-1.

The polymer electrolyte composition was injected into a polyolefin separator having a thickness of 30 μm and thermally polymerized at 70 °C for 2 hours to manufacture a polymer electrolyte having a thickness of 30 μm.

Manufacturing Examples 2 to 5 and Comparative Manufacturing Examples 1 to 3

A polymer electrolyte was prepared in the same manner as in Manufacturing Example 1, except that the types and mixing molar ratios of cross-linkable monomers and ionic monomers were changed as shown in Table 1 below.

Table 1

| Classification | Cross-linkable monomer | Ionic monomer | Mixing molar ratio |
|---|---|---|---|
| Manufacturing Example 1 | Compound 1-1 | Compound 2-1 | 7:3 |
| Manufacturing Example 2 | Compound 1-1 | Compound 2-2 | 7:3 |
| Manufacturing Example 3 | Compound 1-2 | Compound 2-1 | 7:3 |
| Manufacturing Example 4 | Compound 1-3 | Compound 2-1 | 7:3 |
| Manufacturing Example 5 | Compound 1-1 | Compound 2-1 | 3:7 |
| Comparative Manufacturing Example 1 | Compound 1-1 | - | - |
| Comparative Manufacturing Example 2 | Compound A | Compound 2-1 | 7:3 |
| Comparative Manufacturing Example 3 | Compound 1-1 | Compound B | 7:3 |

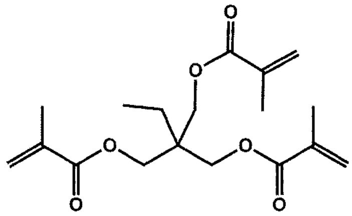

1-1

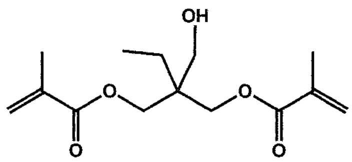

1-2

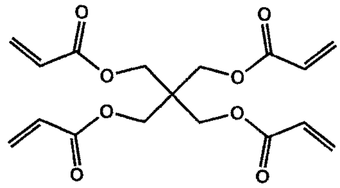

1-3

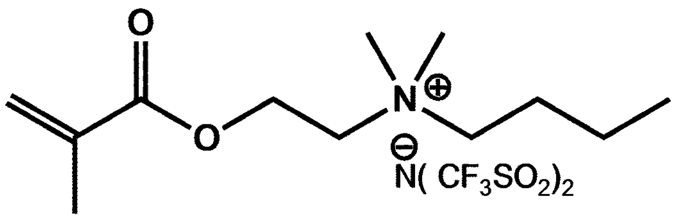

2-1

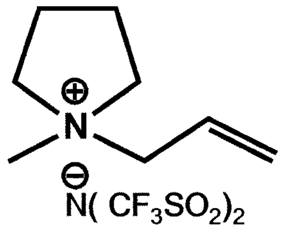

2-2

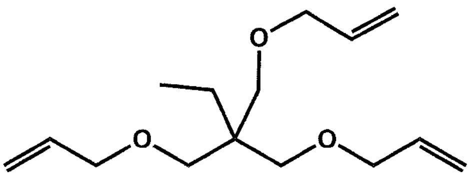

A

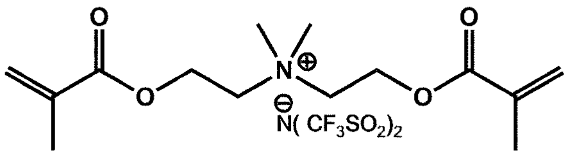

B

Evaluation Example 1: Ionic Conductivity

The ionic conductivity of each of the polymer electrolytes manufactured according to Manufacturing Examples 1 to 5 and Comparative Manufacturing Examples 1 to 3 was evaluated at 25 °C and 45 °C.

The ionic conductivity of each of the polymer electrolytes was measured by using Electrochemical Impedance Spectroscopy. More specifically, the ionic conductivity was evaluated by applying a voltage bias of 10 mV to the polymer electrolyte in the frequency range of 0.1 Hz to 1 MHz, scanning the temperature, and measuring the resistance, and the results are shown in Table 2 below.

Table 2

| Classification | Ionic conductivity at room temperature (25 °C) | Ionic conductivity at high temperature (45 °C) |
|---|---|---|
| Manufacturing Example 1 | 0.29 | 0.92 |
| Manufacturing Example 2 | 0.29 | 0.95 |
| Manufacturing Example 3 | 0.28 | 0.87 |
| Manufacturing Example 4 | 0.27 | 0.71 |
| Manufacturing Example 5 | 0.25 | 0.53 |
| Comparative Manufacturing Example 1 | 0.25 | 0.53 |
| Comparative Manufacturing Example 2 | 0.26 | 0.56 |
| Comparative Manufacturing Example 3 | 0.23 | 0.55 |

Referring to Table 2, the polymer electrolytes of Manufacturing Examples 1 to 5 exhibited improved ionic conductivities at room temperature and high temperature compared to those of Comparative Manufacturing Examples 1 to 3.

Example 1: Manufacture of lithium battery (pouch cell)

$LiNi_{0.6}Co_{0.2}Al_{0.2}O_2$, a conductive material (Super-P; Timcal Ltd.), a binder (PVdF; Solvay), and N-methylpyrrolidone were mixed to obtain a positive electrode composition. The mixing weight ratio of $LiNi_{0.6}Co_{0.2}Al_{0.2}O_2$, the conductive material, and the polymer electrolyte in the positive electrode composition was 95:3:2.

The positive electrode composition was applied onto an aluminum foil (thickness: about 10 μm), dried at 50 °C, and the dried resultant was dried in a vacuum at about 120 °C to manufacture a positive electrode.

A separator (PE; 20 μm) was arranged between the positive electrode obtained through the above process and a copper (Cu) current collector having a thickness of 10 μm, an electrolyte solution was injected thereinto, and then, thermal curing was performed to manufacture a lithium metal battery (pouch cell).

Examples 2 to 5 and Comparative Examples 1 to 3: Manufacture of lithium battery (pouch cell)

A polymer electrolyte was prepared in the same manner as in Manufacturing Example 1, except that the types of polymer electrolyte used were changed as shown in Table 3 below.

Evaluation Example 2: Charge and discharge Characteristics

Each of lithium batteries (pouch cells) manufactured according to Examples 1 to 5 and Comparative Examples 1 to 3 was charged under constant current at 45 °C at a current rate of 0.1 C until the voltage reached 4.30 V (vs. Li), and then cut-off was performed at a current rate of 0.05 C while maintaining 4.30 V in constant voltage mode. Subsequently, the discharge was performed at a constant current of 0.1 C rate until the voltage reached 3.6 V (vs. Li) during discharge (formation stage, 1st cycle). This charging and discharging process was repeated two more times to complete the formation process.

The lithium battery that had undergone the formation stage was charged at a constant current of 0.2 C until the voltage reached 4.3 V (vs. Li), and then cut-off was performed at a current rate of 0.05 C while maintaining 4.3 V in constant voltage mode. After charging was performed, constant current discharge was performed at 0.5 C until the cut-off voltage of 3.6 V was reached. The charging and discharging process described above was repeated a total of 200 times.

In all the charge and discharge cycles, a pause of 10 minutes was allowed after each charge and discharge cycle. Here, the capacity retention rate at the $200^{th}$ cycle is defined by Equation:

Capacity retention rate (%)=[discharge capacity at the $200^{th}$ cycle / discharge capacity at the $1^{st}$ cycle x 100]  Equation

The capacity retention rate and discharge capacity at the $200^{th}$ cycle each for room temperature (25 °C) and high temperature (45 °C) are shown in Table 3 below.

Table 3

| Classifica tion | Polymer electrolyte | Room temperature (25 °C) | | High temperature (45 °C) | |
|---|---|---|---|---|---|
| | | Capacity (mAh) | Capacity retention rate (%) | Capacity (mAh) | Capacity retention rate (%) |
| Example 1 | Manufacturing Example 1 | 15.2 | 76 | 17.2 | 78 |
| Example 2 | Manufacturing Example 2 | 13.9 | 70 | 15.5 | 71 |
| Example 3 | Manufacturing Example 3 | 13.6 | 68 | 14.2 | 65 |
| Example 4 | Manufacturing Example 4 | 14.3 | 72 | 15.6 | 72 |
| Example 5 | Manufacturing Example 5 | 12.1 | 64 | 13.3 | 61 |
| Compara tive Example 1 | Comparative Manufacturing Example 1 | 12.0 | 61 | 13.2 | 61 |

(continued)

| Classifica tion | Polymer electrolyte | Room temperature (25 °C) | | High temperature (45 °C) | |
|---|---|---|---|---|---|
| | | Capacity (mAh) | Capacity retention rate (%) | Capacity (mAh) | Capacity retention rate (%) |
| Compara tive Example 2 | Comparative Manufacturing Example 2 | 10.6 | 53 | 10.6 | 49 |
| Compara tive Example 3 | Comparative Manufacturing Example 3 | 10.9 | 57 | 12.7 | 59 |

Referring to Table 3, Examples 1 to 5, which included polymer electrolytes according to Manufacturing Examples 1 to 5, respectively, had superior room temperature and high temperature capacity characteristics and capacity retention rate characteristics compared to Comparative Examples 1 to 3, which included polymer electrolytes according to Comparative Manufacturing Examples 1 to 3, respectively.

In the descriptions above, embodiments have been described with reference to the drawings and Examples, but are merely examples, and those skilled in the art will understand that various modifications and other equivalent embodiments are possible. Therefore, the scope of protection of the present disclosure should be determined by the appended claims.

**List of Reference Numerals for Major Elements**

[Explanation of Reference numerals]

100, 200: Lithium battery
110, 210: Negative electrode current collector 120, 220: Electrolyte
130, 230: Positive electrode active material layer 140, 240: Positive electrode current collector
150, 250: Positive electrode 225: Metal layer
M: Main chain S: Side chain
E: End

## Claims

1. A polymer electrolyte comprising a cross-linked polymer comprising: a repeating unit (A) derived from a cross-linkable monomer comprising two or more double bond functional groups including an ester bond; and
a repeating unit (B) derived from an ionic monomer comprising an ionic functional group and one double bond functional group.

2. The polymer electrolyte of claim 1,

    wherein the cross-linked polymer comprises a main chain and a plurality of side chains extending from the main chain, and
    the repeating unit (B) derived from an ionic monomer is arranged at one or more ends among ends comprised in the main chain and the plurality of side chains.

3. The polymer electrolyte of claim 1,
wherein the double bond functional group in the cross-linkable monomer comprises an acrylate group.

4. The polymer electrolyte of claim 1,

    wherein the double bond functional group in the cross-linkable monomer is represented by Formula 1:

Formula 1

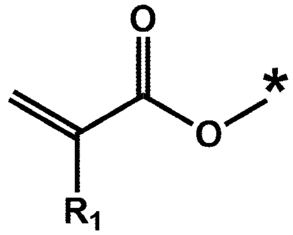

wherein, in Formula 1,
$R_1$ is any one selected from the group consisting of hydrogen, a substituted or unsubstituted alkyl group having 1 to 20 carbon atoms, and a substituted or unsubstituted aryl group having 6 to 20 carbon atoms, and * is a binding site to a neighboring atom.

**5.** The polymer electrolyte of claim 1,
wherein the cross-linkable monomer comprises three or more double bond functional groups including an ester bond.

**6.** The polymer electrolyte of claim 1,
wherein the double bond functional group in the cross-linkable monomer does not comprise an ether group (-O-).

**7.** The polymer electrolyte of claim 1,
wherein the double bond functional group in the ionic monomer comprises an allyl group, an acrylic group, a vinyl group, or a combination thereof.

**8.** The polymer electrolyte of claim 1,
wherein the ionic functional group comprised in the ionic monomer comprises a cationic functional group, an anionic functional group, or a combination thereof.

**9.** The polymer electrolyte of claim 8,
wherein the cationic functional group comprises pyrrolidium, piperidinium, ammonium, imidazolium, phosphonium, or a combination thereof.

**10.** The polymer electrolyte of claim 8,
wherein the anionic functional group comprises trifluoromethanesulfonyl imide (TFSI), bis(fluorosulfonyl) imide (FSI), acetate, bromide ($Br^-$), chloride (Cl-), iodide (I-), dicyanamide, hexafluorophosphate, tetrafluoroborate, hydrogen sulfate, or a combination thereof.

**11.** The polymer electrolyte of claim 1,
wherein the ionic monomer comprises a cationic monomer or a zwitterionic monomer.

**12.** The polymer electrolyte of claim 1,
wherein a molar ratio of the repeating unit (A) derived from a cross-linkable monomer to the repeating unit (B) derived from an ionic monomer, comprised in the cross-linked polymer, is 5:5 to 9:1.

**13.** The polymer electrolyte of claim 1,
wherein the polymer electrolyte further comprises a lithium salt.

**14.** The polymer electrolyte of claim 13,
wherein the lithium salt comprises $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each 1 to 20), LiCl, LiI, or a mixture thereof.

**15.** The polymer electrolyte of claim 1,
wherein the polymer electrolyte further comprises a liquid electrolyte, and the liquid electrolyte comprises an organic solvent or an ionic liquid.

**16.** The polymer electrolyte of claim 15,

wherein the organic solvent comprises propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof, the ionic liquid comprises a cation and an anion,

the cation comprises one or more selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and a mixture thereof, and

the anion comprises one or more selected from BF4-, PF6-, AsF6-, SbF6-, AlCl4-, HSO4-, ClO4-, CH3SO3-, CF3CO2-, Cl-, Br-, I-, BF4-, SO4-, CF3SO3-, (FSO2)2N-, (C2F5SO2)2N-, (C2F5SO2)(CF3SO2)N-, and (CF3SO2)2N-.

**17.** A lithium battery comprising: a positive electrode; a negative electrode; and
the polymer electrolyte of any one of claims 1 to 16 arranged between the positive electrode and the negative electrode.

**18.** The lithium battery of claim 17,

wherein the negative electrode comprises a negative electrode current collector, and
the negative electrode is free of a negative electrode active material layer.

**19.** The lithium battery of claim 18,

wherein the negative electrode current collector comprises a base film and a metal substrate layer arranged on one or both sides of the base film, the base film comprises a polymer, wherein the polymer comprises polyethylene terephthalate (PET), polyethylene (PE), polypropylene (PP), polybutylene terephthalate (PBT), polyimide (PI), or a combination thereof, and
the metal substrate layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

**20.** The lithium battery of claim 18,
further comprising a lithium metal layer arranged between the negative electrode current collector and the polymer electrolyte.

**FIG. 1**

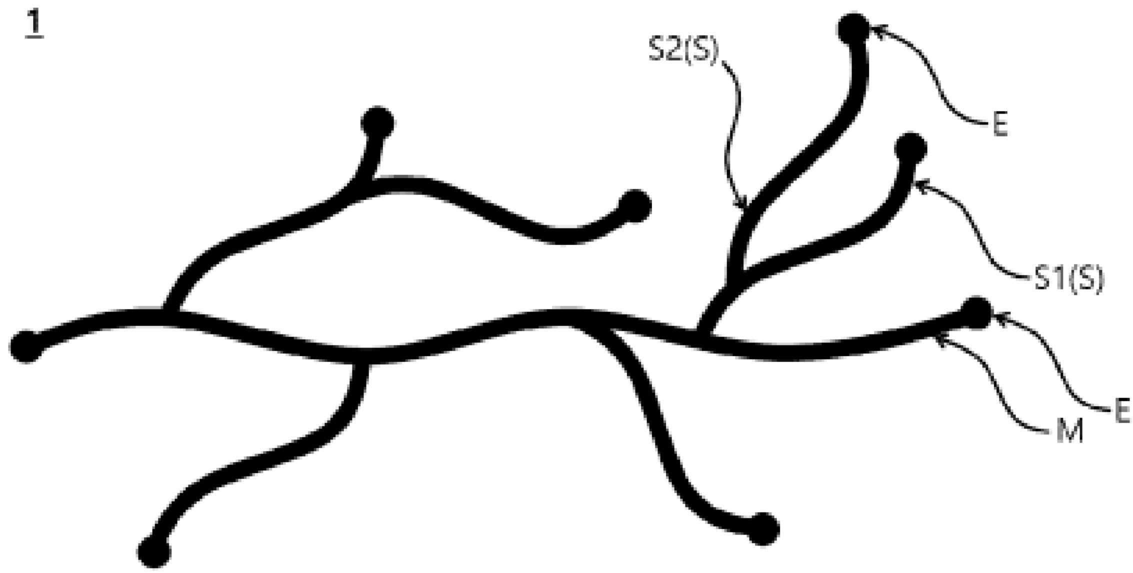

**FIG. 2**

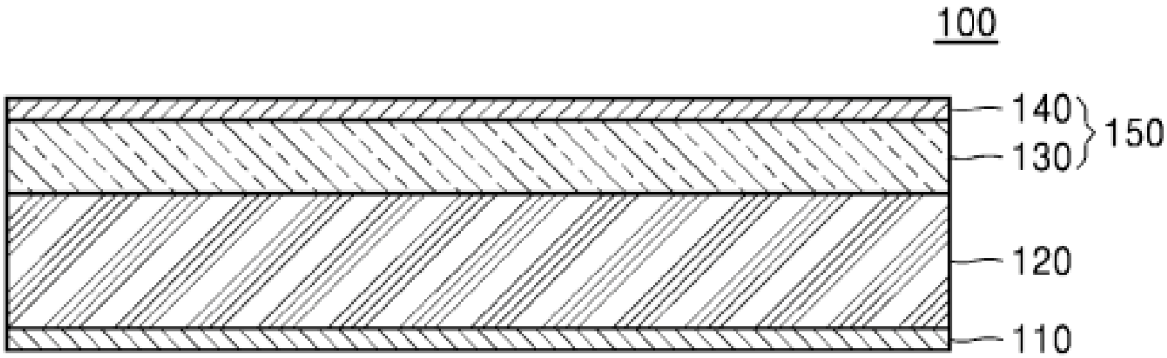

# FIG. 3

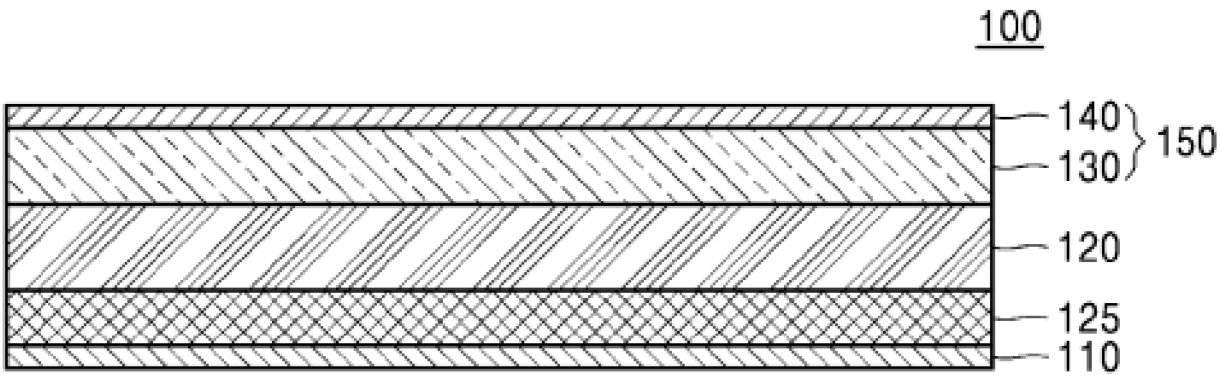

**FIG. 4**

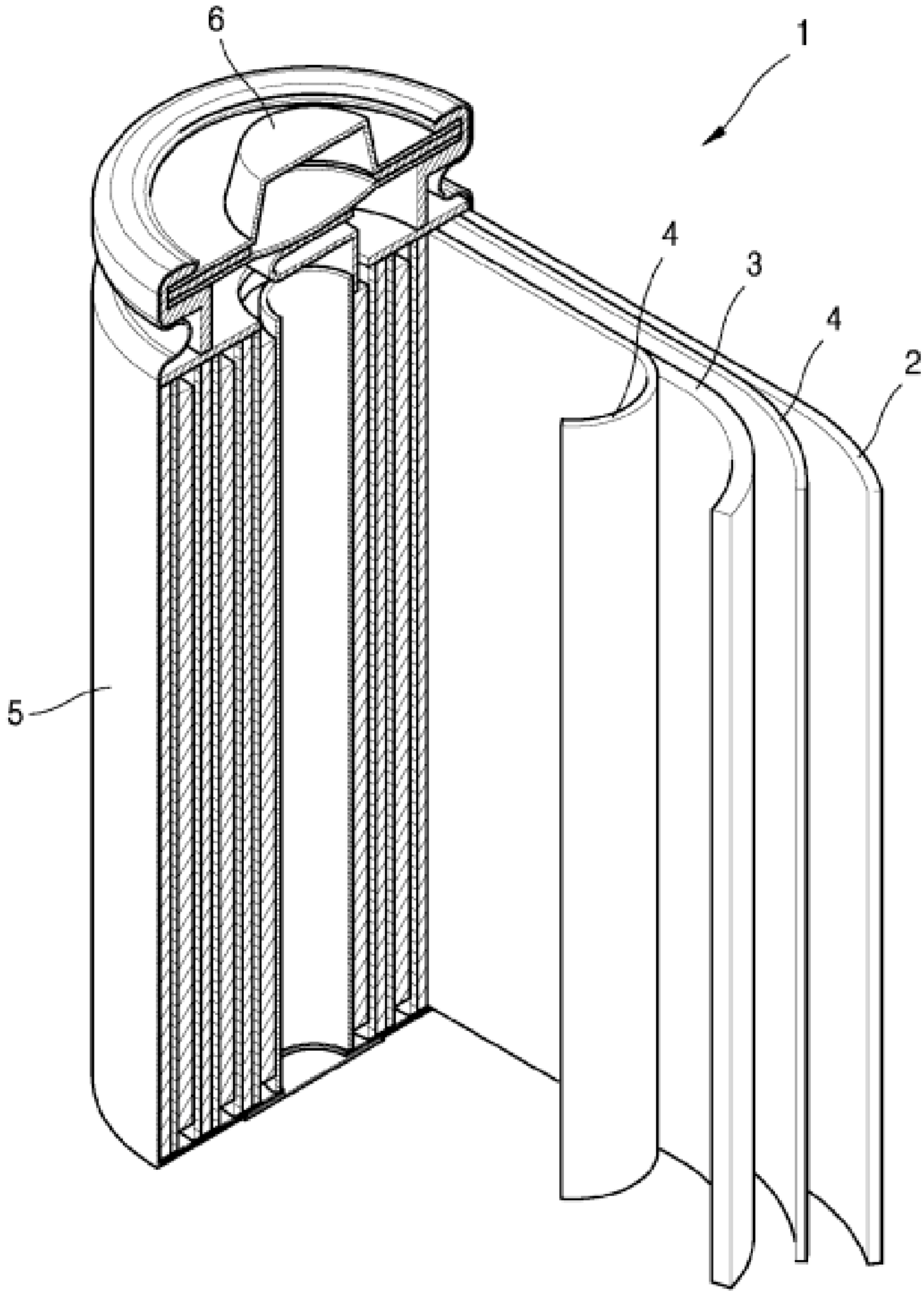

FIG. 5

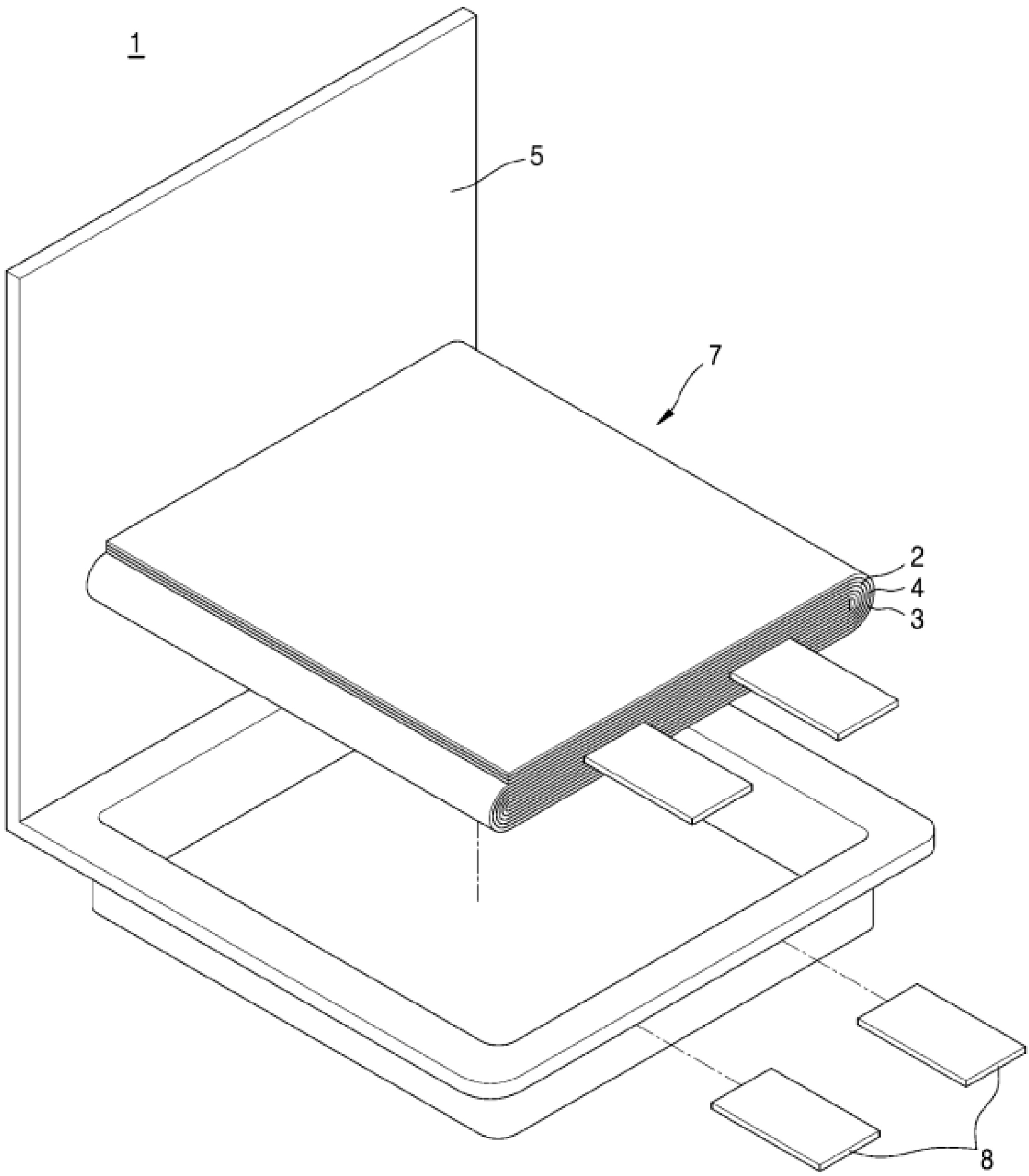

# FIG. 6

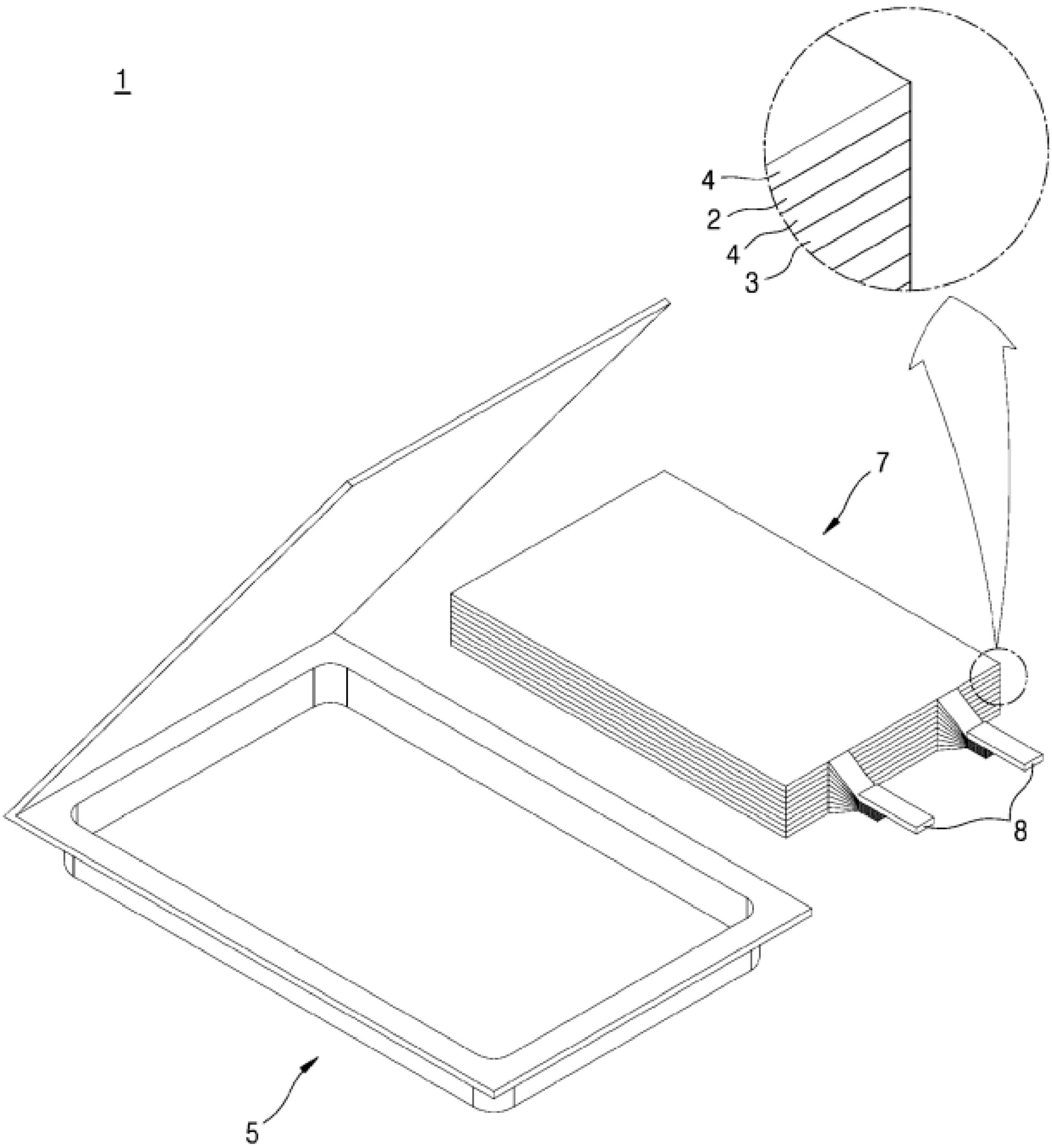

**INTERNATIONAL SEARCH REPORT**

International application No.
**PCT/KR2024/003783**

**A. CLASSIFICATION OF SUBJECT MATTER**

**H01M 10/0565**(2010.01)i; **H01M 10/0569**(2010.01)i; **H01M 4/134**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0565(2010.01); C08F 2/44(2006.01); H01B 1/06(2006.01); H01M 10/052(2010.01); H01M 10/0562(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 고분자 전해질(polymer electrolyte), 가교성 단량체(crosslinkable monomer), 이온성 작용기(ionic functional group)

**C. DOCUMENTS CONSIDERED TO BE RELEVANT**

| Category* | Citation of document, with indication, where appropriate, of the relevant passages | Relevant to claim No. |
|---|---|---|
| X<br>Y | VALVERDE, D. et al. Free ion diffusivity and charge concentration on cross-linked polymeric ionic liquid iongel films based on sulfonated zwitterionic salts and lithium ions. Physical chemistry chemical physics. 2019, vol. 21, no. 32, inner pp. 1-10.<br>See pages 1, 3 and 6; and Schemes 1 and 2. | 1-12<br>13-20 |
| Y | KR 10-2018-0116145 A (LG CHEM, LTD.) 24 October 2018 (2018-10-24)<br>See claims 1, 4, 5 and 7; and paragraphs [0094], [0096] and [0106]. | 13-20 |
| A | JP 2004-281147 A (SUMITOMO BAKELITE CO., LTD.) 07 October 2004 (2004-10-07)<br>See entire document. | 1-20 |
| A | KR 10-2020-0030975 A (GRINERGY CO., LTD.) 23 March 2020 (2020-03-23)<br>See entire document. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 June 2024** | **27 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/003783

C. DOCUMENTS CONSIDERED TO BE RELEVANT

| Category* | Citation of document, with indication, where appropriate, of the relevant passages | Relevant to claim No. |
|---|---|---|
| A | SATO, T. et al. High rate performance of a lithium polymer battery using a novel ionic liquid polymer composite. Journal of power sources. 2007, vol. 164, pp. 390-396. See entire document. | 1-20 |

Form PCT/ISA/210 (second sheet) (July 2022)

**INTERNATIONAL SEARCH REPORT**
**Information on patent family members**

International application No.
**PCT/KR2024/003783**

| Patent document cited in search report | Publication date (day/month/year) | Patent family member(s) | Publication date (day/month/year) |
|---|---|---|---|
| KR 10-2018-0116145 A | 24 October 2018 | CN 110100346 A | 06 August 2019 |
| | | CN 110100346 B | 03 June 2022 |
| | | EP 3509153 A1 | 10 July 2019 |
| | | EP 3509153 A4 | 10 July 2019 |
| | | EP 3509153 B1 | 24 August 2022 |
| | | JP 2019-530166 A | 17 October 2019 |
| | | PL 3509153 T3 | 31 October 2022 |
| | | US 11710851 B2 | 25 July 2023 |
| | | US 2020-0144666 A1 | 07 May 2020 |
| | | WO 2018-190644 A1 | 18 October 2018 |
| JP 2004-281147 A | 07 October 2004 | JP 4389454 B2 | 24 December 2009 |
| KR 10-2020-0030975 A | 23 March 2020 | KR 10-2128041 B1 | 29 June 2020 |

Form PCT/ISA/210 (patent family annex) (July 2022)